# EUROPÄISCHE PATENTSCHRIFT

(11) **EP 3 791 140 B1**
(45) Veröffentlichungstag und Bekanntmachung des Hinweises auf die Patenterteilung: **28.09.2022**
(21) Anmeldenummer: 19729162.8
(22) Anmeldetag: 08.05.2019
(51) Int. Cl.: G01F 1/66, G01F 15/14

(54) **ULTRASCHALLZÄHLER**
ULTRASONIC METER
COMPTEUR À ULTRASONS

(30) Priorität: 09.05.2018 DE 202018102622 U
(43) Veröffentlichungstag der Anmeldung: 17.03.2021
(73) Patentinhaber: Zenner International GmbH & Co. KG, 66121 Saarbrücken (DE)
(72) Erfinder: CALMES, Manfred, 66663 Merzig-Mondorf (DE)
(74) Vertreter: Patentanwaltskanzlei Vièl & Wieske PartGmbB
(86) Internationale Anmeldenummer: PCT/DE2019/100415
(87) Internationale Veröffentlichungsnummer: WO 2019/214780

(56) Entgegenhaltungen:
- WO-A1-2018/011372
- CN-A- 103 033 224
- CN-U- 202 661 118
- CN-U- 204 855 039
- DE-A1- 19 549 162

## Beschreibung

Die Erfindung betrifft einen Ultraschallzähler zur Erfassung einer Durchflussmenge bzw. eines -volumens, umfassend einen Fluideinlaß, einen Fluidauslaß und einen zwischen dem Fluideinlaß und dem Fluidauslaß angeordneten Strömungskanal, zwei Ultraschallwandler sowie mindestens einen Reflektor für Ultraschallsignale, wobei die Ultraschallwandler außerhalb des Strömungskanals angeordnet sind und zwischen den Ultraschallwandlern und dem Strömungskanal jeweils eine schräg zur Längsachse des Strömungskanals verlaufende Eintritts- bzw. Austrittsöffnung für Ultraschallsignale vorgesehen ist, wobei an der der Eintritts- bzw. Austrittsöffnung gegenüberliegenden Wandung des Strömungskanals der Reflektor so angeordnet ist, daß er Ultraschallsignale der Ultraschallwandler reflektiert, wobei ein Temperaturfühler vorgesehen ist, der im Strömungskanal mit Fluid umspülbar ist.

Aus der EP 1 798 528 A1 ist eine Durchflußmengenmeßeinrichtung für fluide Medien bekannt, die aus einem Gehäuse besteht, dessen Inneres durch eine Gehäuseinnenwand begrenzt ist, deinem innerhalb des Gehäuses angeordneten Meßrohr, das eine Meßstrecke für eine Laufzeitmessung bestimmt und einer Ultraschallmeßeinrichtung, umfassend mindestens einen Ultraschallwandler zur Abstrahlung von Ultraschallwellen in das Gehäuseinnere, mindestens einem Umlenkspiegel an der Meßstrecke mit einer Vorderseite, mittels dem die Ulraschallwellen in die Meßstrecke umgelenkt werden, und einer der Vorderseite gegenüberliegenden Rückseite, wobei der Umlenkspiegel einen Tragearm aufweist, der zwischen der Gehäuseinnenwand und dem Meßrohr gehaltert ist. Bei dieser Vorrichtung ist der Umlenkspiegel in der Strömung angeordnet, was das Meßergebnis verfälscht.

Aus der EP 2 270 439 A1 ist ein Ultraschalldurchflußmesser, umfassend ein Gehäuse, ein Meßrohr, eine Reflektoreinheit, umfassend einen Reflektor, der ausgebildet ist, Ultraschallsignale zu reflektieren und einen Reflektorhalter, der von einer Öffnung in dem Gehäuse in das Gehäuse eingesetzt ist sowie einen ersten und einen zweiten Ultraschallwandler, die so in Bezug auf die Reflektoreinheit und in Bezug auf das Meßrohr befestigt sind, daß der Reflektor Ultraschallsignale zwischen dem ersten und dem zweiten Ultraschallwandler zu reflektieren, wobei die Reflektoreinheit in einem einzelnen Ausformungsprozeß als ein einzelnes monolithisches Polymerelement ausgebildet ist. Auch hier ist die Reflektoreinheit innerhalb der Strömung angeordnet, was zu einer Verfälschung der Meßergebnisse führt.

Die EP 1 967828 A1 beschreibt einen Fluidzähler mit einem Meßrohrgehäuse, einer im Meßrohrgehäuse befindlichen Meßstrecke, einer Ultraschallwandleranordnung aus mindestens einem Ultraschallwandler zum Erzeugen eines Ultraschallsignals und/oder zur Umwandlung eines die Meßstrecke durchlaufenden Ultraschallsignals in ein elektrisches Signal und einer Umlenkeinrichtung zur Umlenkung des Ultraschallsignals, wobei das Ultraschallsignal in Einbaulage des Fluidzählers nicht von oben auf die Umlenkeinrichtung auftrifft. Dies dient dazu, die Ansammlung von Bläschen im Bereich der Umlenkeinrichtung zu vermeiden.

Die DE 195 49 162 A1 betrifft einen Ultraschall-Durchflußmesser zur Messung der Durchströmung von Flüssigkeit oder Gas durch ein Messrohr, das mit Ultraschall-Signalwandlern versehen ist. Dabei wird der Ultraschall von einer Rohrwand, die mindestens eine fokussierende Reflexionsfläche hat, reflektiert. Mindestens eine fokussierende Reflexionsfläche ist in Form einer Ellipse gekrümmt und die Signalwandler sind in den Brennpunkten der Ellipse angebracht.

Die WO 2018/011372 A1 beschreibt einen Durchflußmesser mit zumindest zwei zueinander beabstandeten Ultraschall-Sensoren, wobei die Ein- und Auskopplung der Messignale in bzw. aus einem Fluid über ein Koppelstück erfolgt. Der Messkanal weist in etwa eine Ovalform auf oder ist zu einem der den Sensoren gegenüberliegenden Bereich etwa trapezförmig verjüngt.

Aus der CN 204 855 039 U ist ein Ultraschallkalorimeter mit zwei Wandlern einem Temperatursensor, sowie einer Ultraschallwellen-Reflektorplatte bekannt.

Die CN 202 661 118 U betrifft einen Durchflußmesser mit zwei Ultaschallwandlern. Der Schnittpunkt der Emissionsfläche der beiden Ultraschallwandler liegt dabei auf der Innenfläche eines Ultaschallreflektors.

Die CN 103 033 224 A beschreibt ein Ultraschall-Durchflußmessgerät, wobei das untere Ende eine vertikalen Zylinderbohrung aufweist und der mittlere Teil des Zählerkolbens und eine scheibenförmige Reflexionsantenne in der vertikalen Zylinderbohrung installiert sind.

Die Aufgabe der vorliegenden Erfindung besteht darin, einen Ultraschallzähler gemäß dem Oberbegriff zu schaffen, bei dem ein möglichst ungestörter Fluiddurchgang durch den Strömungskanal vorliegt, um ein unverfälschtes Meßergebnis zu erzielen.

Diese Aufgabe wird erfindungsgemäß bei einem Ultraschallzähler gemäß dem Oberbegriff dadurch erreicht, daß der Strömungskanal mittels des Temperaturfühlers gegenüber dem Zählergehäuse axial und radial fixierbar ist.

Im Gegensatz zu Ultraschallzählern gemäß dem Stand der Technik tritt das Ultraschallsignal schräg, vorzugsweise in einem Winkel von 45° in den Strömungskanal ein und auch schräg wieder aus diesem aus. Durch die Anbringung der Ultraschallwandler außerhalb des Strömungskanals und der Anordnung des Reflektors im Bereich der Wandung des Strömungskanals wird erreicht, daß der Flüssigkeitsdurchgang durch den Strömungskanal nicht durch diese Elemente gestört wird. Eine Verfälschung des Meßergebnisses wird hierdurch vermieden. Durch diese Anordnung wird zudem eine direkte Anströmung bzw. Umströmung der Reflektorelemente bzw. der Ultraschallwandler vermieden, wodurch die Gefahr der Abnutzung bzw. Beschädigung, beispielsweise durch die Strömungskräfte bzw. durch vorhandene Partikel in der Strömung, vermieden wird. Durch die seitliche Anordnung der Ultraschallwandler und der Reflektoren wird zudem eine nachteilige Blasenbildung am höchsten Punkt der Messanordnung, beispielsweise vor den Ultraschallwandlern, vermieden.

Das Ultraschallsignal läuft von einem ersten Ultraschallwandler über die Eintrittsöffnung in den Strömungskanal, durchquert diesen, wird an dem Reflektor reflektiert, durchquert nochmals den Strömungskanal, läuft durch eine Austrittsöffnung zu dem zweiten Ultraschallwandler und dann wieder zurück bis zum ersten Ultraschallwandler, wonach über die Laufzeit des Signals der Volumenstrom des Fluids in dem Strömungskanal ermittelt wird.

Um eine hohe Messgenauigkeit über den gesamten Temperaturbereich zu erzielen wird ein Temperaturfühler eingesetzt, der im Strömungskanal mit Fluid umspülbar ist.

Dieser Temperaturfühler ist in vorteilhafter Weise zur axialen und radialen Fixierung des Strömungskanals gegenüber dem Zählergehäuse verwendet.

Weiterhin ist im Rahmen der Erfindung vorgesehen, daß der Strömungskanal einen im Wesentlichen rechteckigen, vorzugsweise im Wesentlichen quadratischen Querschnitt aufweist.

Hierbei können die Ecken des Rechtecks bzw. des Quadrats gerundet sein. Die Ausführung des Strömungskanals in Rechteckform, ermöglicht es über den seitlich angeordneten Reflektor den durchströmten Bereich (fast) komplett abzudecken.

In diesem Zusammenhang ist es vorteilhaft, daß der Strömungskanal geneigt zum Zählwerksgehäuse angeordnet ist.

Dies ermöglicht die Positionierung einer Batterieeinheit oberhalb der Rohrachse, wodurch sowohl horizontal als auch vertikal zur Rohrachse der geringstmögliche Platzbedarf gegeben ist.

Es ist vorteilhaft, daß eine Zählwerkseinheit vorgesehen ist, welche mit einem fluidundurchlässigen Material vergossen ist.

Durch das Vergießen mit einem fluidundurchlässigen Material wird die Zählwerkseinheit zuverlässig vor Fluiden geschützt.

Weiterhin ist es vorteilhaft, daß eine austauschbare Batterieeinheit zum Versorgen der Zählwerkseinheit vorgesehen ist, wobei eine Batterie in der Batterieeinheit mit einem fluidundurchlässigen Material vergossen ist.

Die Batterieeinheit besteht vorzugsweise aus einer Batterie, die in dem Gehäuse der Batterieeinheit vollständig vergossen ist und die mittels einer Steckverbindung zur Zählwerkseinheit, die durch ein oder mehrere Dichtelemente abgedichtet ist, ohne Hilfsmittel oder mit einfachen Hilfsmitteln ausgetauscht werden kann. Dabei bleibt die Dichtheit (gemäß der Schutzklasse IP68) sowohl des Batterieelementes als auch des kompletten Zählwerkes vollständig erhalten. Geeignete Vergußmassen für derartige Bauelemente sind bekannt.

Nachfolgend wird ein Ausführungsbeispiel der Erfindung anhand von Zeichnungen näher erläutert.

Es zeigen
- Fig. 1: eine geschnittene Darstellung eines erfindungsgemäßen Ultraschallzählers,
- Fig. 2a: eine Vorderansicht einer erfindungsgemäßen Zählwerkseinheit mit einem gerade zum Zählwerksgehäuse angeordneten Strömungskanal,
- Fig. 2b: eine Vorderansicht einer erfindungsgemäßen Zählwerkseinheit mit einem geneigt zum Zählwerksgehäuse angeordneten Strömungskanal,
- Fig. 3: die Steckverbindung zwischen der Batterieeinheit und der Zählwerkseinheit.
- Fig. 4: die Fixierung des Messkanals mit Hilfe eines Temperaturfühlers.

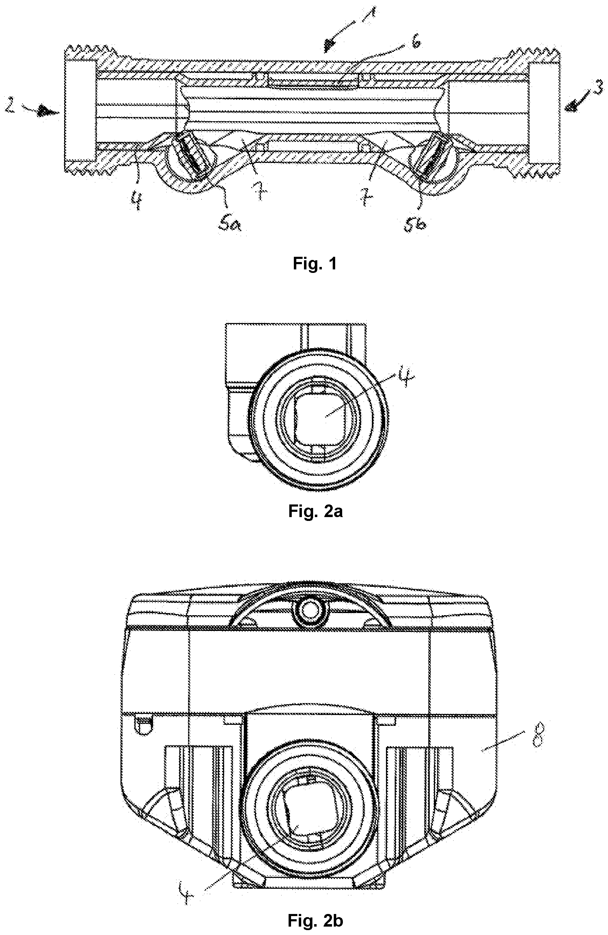

Wie aus Fig. 1 ersichtlich, umfaßt der erfindungsgemäße Ultraschallzähler (1) einem Fluideinlaß (2) und einem Fluidauslaß (3) sowie einen, den Fluideinlaß (2) mit dem Fluidauslaß (3) verbindendem Strömungskanal (4).

Der Strömungskanal (4) bildet einen Messbereich, der sich geradlinig in eine Strömungsrichtung erstreckt.

Am Ein- und Ausgang des Strömungskanals (4) ist jeweils seitlich ein Ultraschallwandler (5a, 5b) angebracht, der das Ultraschallsignal über einen ebenfalls seitlich angebrachten Reflektor (6) an den zweiten Ultraschallwandler (5b, 5a) sendet bzw. es von diesem empfängt.

Die Ultraschallwandler (5a, 5b) und der Reflektor sind so angeordnet, dass das Fluid ungestört durch einen "offenen Querschnitt" fließen kann, d.h. dass die Strömung nicht durch diese Elemente beeinflusst wird. Der Reflektor (6) ist an der Innenwand des Strömungskanals (4) angeordnet.

Durch diese Anordnung wird eine direkte Anströmung bzw. Umströmung des Reflektors (6) bzw. der Ultraschallwandler (5a, 5b) vermieden, wodurch die Gefahr der Abnutzung bzw. Beschädigung, die ggf. durch die Strömungskräfte bzw. durch vorhandene Partikel in der Strömung, vermieden wird.

Zwischen den Ultraschallwandlern (5a, 5b) und dem Strömungskanal (4) ist jeweils eine schräg (bevorzugt in einem Winkel von 45°) zur Längsachse des Strömungskanals (4) verlaufende Eintritts- bzw. Austrittsöffnung (7) für das Ultraschallsignal vorgesehen.

Durch die seitliche Anordnung der Ultraschallwandler (5a, 5b) und des Reflektors kann eine nachteilige Blasenbildung am höchsten Punkt der Messanordnung, beispielsweise vor den Ultraschallwandlern (5a, 5b) vermieden werden.

Die Ausführung des Strömungskanals (4) in Rechteckform ist in den Fig. 2a und 2b zu erkennen. Sie ermöglicht es, über den seitlich angeordneten Reflektor (6) den durchströmten Bereich (fast) komplett abzudecken.

In der Ausgestaltung gemäß Fig. 2b ist der Strömungskanal (4) geneigt zum Zählwerksgehäuse angeordnet, um die Positionierung einer Batterieeinheit oberhalb der Rohrachse zu ermöglichen und somit sowohl horizontal als auch vertikal zur Rohrachse den geringstmöglichen Platzbedarf zu haben.

Die Ultraschallsignale werden von den Ultraschallwandlern an eine Zählwerkseinheit (8) weitergeleitet, die mit einem fluidundurchlässigen Material vollständig vergossen ist und mittels einer Batterieeinheit (9) mit Spannung versorgt wird.

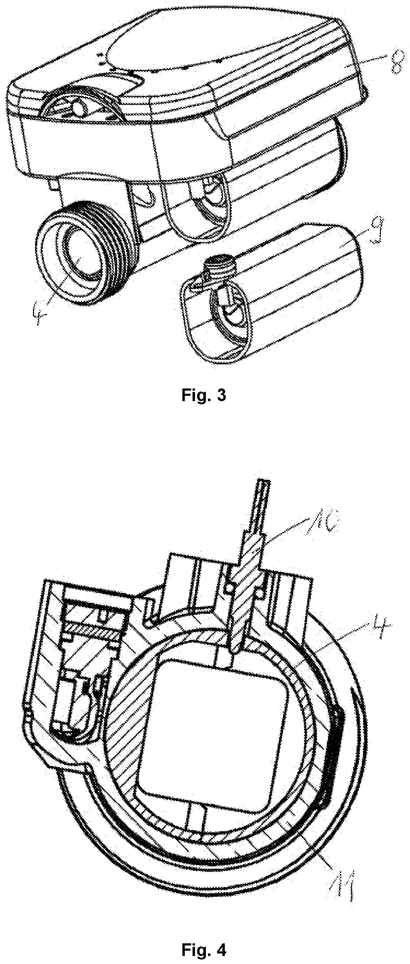

Die Batterieeinheit (9) besteht aus einer Batterie (oder mehreren Batterien), die in einem Gehäuse mit fluidundurchlässigem Material vollständig vergossen ist, wobei die Batterieeinheit (9) - wie in Fig. 3 dargestellt - mittels einer Steckverbindung zur Zählwerkseinheit (8), die durch ein oder mehrere Dichtelemente abgedichtet ist, ohne Hilfsmittel oder unter Zuhilfenahme einfacher Hilfsmittel ausgetauscht werden kann. Dabei bleibt die Dichtheit sowohl der Batterieeinheit (9) als auch der kompletten Zählwerkseinheit (8) vollständig erhalten.

Wie in Fig. 4 dargestellt, ist zur Erhöhung der Meßgenauigkeit ein Temperaturfühler 10 vorgesehen, der im Strömungskanal 4 von Fluid umspült wird. In vorteilhafter Weise erfolgt die axiale und radiale Fixierung des Strömungskanals 4 gegenüber dem Zählergehäuse 11 mittels des Temperaturfühlers 10, der - wie aus Fig. 4 ersichtlich - eine form- und/oder kraftschlüssige Verbindung zwischen dem Zählergehäuse 11 und dem Strömungskanal 4 herstellt.

## Patentansprüche

1. Ultraschallzähler (1) zur Erfassung einer Durchflussmenge bzw. eines -volumens, umfassend einen Fluideinlaß (2), einen Fluidauslaß (3) und einen zwischen dem Fluideinlaß (2) und dem Fluidauslaß (3) angeordneten Strömungskanal (4), zwei Ultraschallwandler (5a, 5b) sowie mindestens einen Reflektor (6) für Ultraschallsignale, wobei die Ultraschallwandler (5a, 5b) außerhalb des Strömungskanals (4) angeordnet sind und zwischen den Ultraschallwandlern (5a, 5b) und dem Strömungskanal (4) jeweils eine schräg zur Längsachse des Strömungskanals (4) verlaufende Eintritts- bzw. Austrittsöffnung (7) für Ultraschallsignale vorgesehen ist, wobei an der der Eintritts- bzw. Austrittsöffnung (7) gegenüberliegenden Wandung des Strömungskanals (4) der Reflektor (6) so angeordnet ist, daß er Ultraschallsignale der Ultraschallwandler (5a, 5b) reflektiert, wobei ein Temperaturfühler (10) vorgesehen ist, der im Strömungskanal (4) mit Fluid umspülbar ist, **dadurch gekennzeichnet, daß** der Strömungskanal (4) mittels des Temperaturfühlers (10) gegenüber dem Zählergehäuse (11) axial und radial fixierbar ist.

2. Ultraschallzähler gemäß Anspruch 1, **dadurch gekennzeichnet, daß** der Strömungskanal (4) einen im Wesentlichen rechteckigen, vorzugsweise im Wesentlichen quadratischen Querschnitt aufweist.

3. Ultraschallzähler gemäß Anspruch 2, **dadurch gekennzeichnet, daß** der Strömungskanal (4) geneigt zum Zählwerksgehäuse des Ultraschallzählers (1) angeordnet ist.

4. Ultraschallzähler gemäß einem der Ansprüche 1 bis 3, **dadurch gekennzeichnet, daß** eine Zählwerkseinheit (8) vorgesehen ist, welche mit einem fluidundurchlässigen Material vergossen ist.

5. Ultraschallzähler gemäß einem der Ansprüche 1 bis 4, **dadurch gekennzeichnet, daß** eine austauschbare Batterieeinheit (9) zum Versorgen der Zählwerkseinheit (8) vorgesehen ist, wobei eine Batterie in der Batterieeinheit (9) mit einem fluidundurchlässigen Material vergossen ist.

## Claims

1. An ultrasonic meter (1) for measuring a flow rate or flow volume, comprising a fluid inlet (2), a fluid outlet (3) and a flow channel (4) arranged between the fluid inlet (2) and the fluid outlet (3), two ultrasonic transducers (5a, 5b) and at least one reflector (6) for ultrasonic signals, wherein the ultrasonic transducers (5a, 5b) are arranged outside the flow channel (4) and entrance and exit openings (7) for ultrasonic signals, each running obliquely relative to the longitudinal axis of the flow channel (4), are provided between the ultrasonic transducers (5a, 5b) and the flow channel (4), wherein the reflector (6) is arranged on the wall of the flow channel (4) opposite the entrance and exit openings (7) such that it reflects ultrasonic signals of the ultrasonic transducers (5a, 5b), wherein a temperature sensor (10) is provided, which can be washed over by fluid in the flow channel (4), **characterised in that** the flow channel (4) can be axially and radially fixed relative to the meter housing (11) using the temperature sensor (10).

2. The ultrasonic meter according to claim 1, **characterised in that** the flow channel (4) has a substantially rectangular, preferably substantially square, cross-section.

3. The ultrasonic meter according to claim 2, **characterised in that** the flow channel (4) is arranged such that it is inclined relative to the counting mechanism housing of the ultrasonic meter (1).

4. The ultrasonic meter according to one of claims 1 to 3, **characterised in that** a counting mechanism unit (8) is provided, which is encapsulated with a fluid-impermeable material.

5. The ultrasonic meter according to one of claims 1 to 4, **characterised in that** a replaceable battery unit (9) is provided for powering the counting mechanism unit (8), wherein a battery is encapsulated with a fluid-impermeable material in the battery unit (9).

## Revendications

1. Compteur à ultrasons (1) pour la détection d'un débit ou d'un volume de passage, comprenant une entrée de fluide (2), une sortie de fluide (3) et un canal d'écoulement (4) disposé entre l'entrée de fluide (2) et la sortie de fluide (3), deux transducteurs à ultrasons (5a, 5b) ainsi qu'au moins un réflecteur (6) pour les signaux ultrasonores, les transducteurs à ultrasons (5a, 5b) étant disposés à l'extérieur du canal d'écoulement (4) et, une ouverture d'entrée ou de sortie (7) pour les signaux ultrasoniques étant prévue entre chaque transducteur à ultrasons (5a, 5b) et le canal d'écoulement (4), laquelle ouverture s'étend obliquement par rapport à l'axe longitudinal du canal d'écoulement (4), le réflecteur (6) est disposé sur la paroi du canal d'écoulement (4) opposée à l'ouverture d'entrée ou de sortie (7) de telle sorte qu'il réfléchit les signaux ultrasonores des transducteurs à ultrasons (5a, 5b), une sonde de température (10) étant prévue, qui peut être balayée par un fluide dans le canal d'écoulement (4), **caractérisé en ce que** le canal d'écoulement (4) peut être fixé axialement et radialement par rapport au boîtier de compteur (11) au moyen de la sonde de température (10).

2. Compteur à ultrasons selon la revendication 1, **caractérisé en ce que** le canal d'écoulement (4) présente une section transversale essentiellement rectangulaire, de préférence essentiellement carrée.

3. Compteur à ultrasons selon la revendication 2, **caractérisé en ce que** le canal d'écoulement (4) est disposé de manière inclinée par rapport au boîtier de compteur du compteur à ultrasons (1).

4. Compteur à ultrasons selon l'une des revendications 1 à 3, **caractérisé en ce qu'**il est prévu une unité de compteur (8) qui est scellée avec un matériau imperméable aux fluides.

5. Compteur à ultrasons selon l'une des revendications 1 à 4, **caractérisé en ce qu'**une unité de batterie remplaçable (9) est prévue pour alimenter l'unité de compteur (8), une batterie dans l'unité de batterie (9) étant scellée avec un matériau imperméable aux fluides.
